# EUROPEAN PATENT APPLICATION

(11) **EP 2 192 535 A1**
(43) Date of publication of application: **02.06.2010**
(21) Application number: 09176820.0
(22) Date of filing: 24.11.2009
(51) Int. Cl.: G06Q 10/00

(54) **System for managing social networks through mobile medium**

(30) Priority: 26.11.2008 TR 200809038
(71) Applicant: Arti Teknoloji-Bora Tayfun Sahinoglu Ibrahim Alagoz Kollektif Sirketi, 34398 Istanbul (TR)
(72) Inventor: Sahinoglu, Burc, Istanbul (TR)
(74) Representative: Dericioglu, Ekin

(57) **Abstract**

The present invention relates to a system for managing socials networks through mobile medium (1), which enables the users to manage the social networks of which they are members and to communicate with their friends in the social networks as a group, and which creates new social networks by monitoring the communication habits of the user. If the user desires, she/he can inform the other users about her/his status. The system (1) determines the best method of communication to be used for communicating with the people the user wants to contact and operates accordingly.

## Description

### Field of the Invention

The present invention relates to a system for managing socials networks through mobile medium which enables the user to manage and interact with the social networks of which she/he is a member from a single center, whereby allows her/him to connect with the existing social networks.

### Background of the Invention

There are social networks in the Internet environment, where the users submit their personal information, communicate with each other and spend time by various activities.

Social networks are environments in the Internet where the users have nice time. Users are involved in various activities in these environments within the framework of the rights they are entitled to. They can create an image, make new friends, communicate with the existing friends and get involved in many more activities.

Today, social networks are increasingly becoming more important and their number is rapidly increasing. Users are signing up to a multiple social networks at the same time and they keep separate updating and registration information for each of them. This makes it difficult for the user to manage the networks she/he is a member of.

The user has to re-enter the same information for each network to which she/he is a member of. This causes the user to lose time. The user can not update her/his information for all social networks at the same time. She/he can not concurrently communicate with friends from different social networks.

Today, as the social networks have become widespread, access to these networks through mobile devices has also increased. In these types of applications, the user first of all has to load software suitable to the mobile device. The system connects to the Internet environment enabling the user to connect to the network that she/he desires to reach. These systems do not allow the user to connect to multiple social networks at the same time and communicate with the users across networks concurrently.

Although the currently available systems allow mobile devices to connect to a social network making things easier for the user, they do not allow management of more than one social network at the same time or communication with the other users in the social network.

The United States patent document US2005272413 known in the art discloses a system for connecting to social networks via a mobile medium. Through this system it is connected to the social network medium via a mobile phone. Matching is performed by the calls of the users. The users are allowed to use messaging when necessary. The user cannot access all the networks that she/he is a member of from a single point.

The United States patent document US2007117576 in the art discloses a system for connecting to social networks from a mobile medium. In this system, the location and other information related to the person that the user wants to contact are provided by the system. If the user wants, she/he can send and receive messages. In this system, the user can not access all the networks that she/he is a member of from a single point.

The United States patent document US2007282621 known in the art discloses a system for connecting to social networks from a mobile medium. In this system, mobile phone users are connected to the network via the server. Users who are connected to the server within a certain physical area can communicate.

The United States patent document US2008031203 known in the art discloses a system for connecting to social networks from a mobile medium. In this system, a wireless connection is provided in a closed network. The device with which connection is established is connected to the server. This server can match with the other devices that are connected thereon. Additionally, the device also provides the user the opportunity to communicate via messages.

### Summary of the Invention

The objective of the present invention is to enable the user to access the social networks of which she/he is a member and communicate within these social networks.

Another objective of the invention is to enable the user to manage the social networks of which she/he is a member from a single point and to enable her/him to communicate with the social network contacts available on the device more easily.

A further objective of the invention is to create a new social network by monitoring the communication habits of the user and to facilitate access thereto.

Yet another objective of the invention is to allow putting one or more tags for all the contacts in the user list and to enable communication with all of the persons that are tagged.

### Detailed Description of the Invention

The system for managing social networks through mobile medium realized to fulfill the objective of the present invention is illustrated in the accompanying figures, in which,

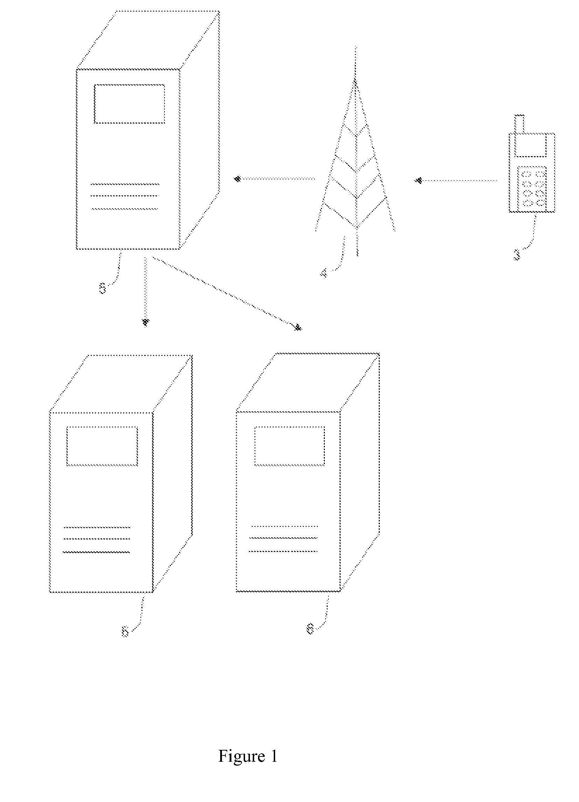

Figure 1 is the overall view showing the working diagram of the system.

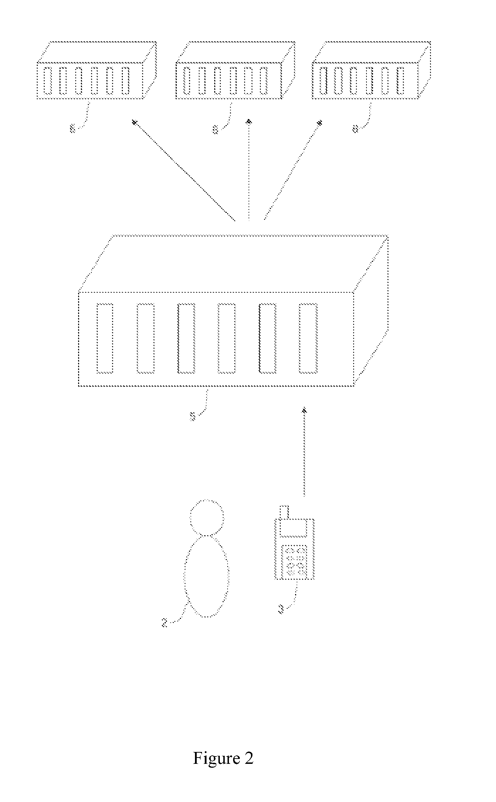

Figure 2 is the schematic view showing the operation of the system.

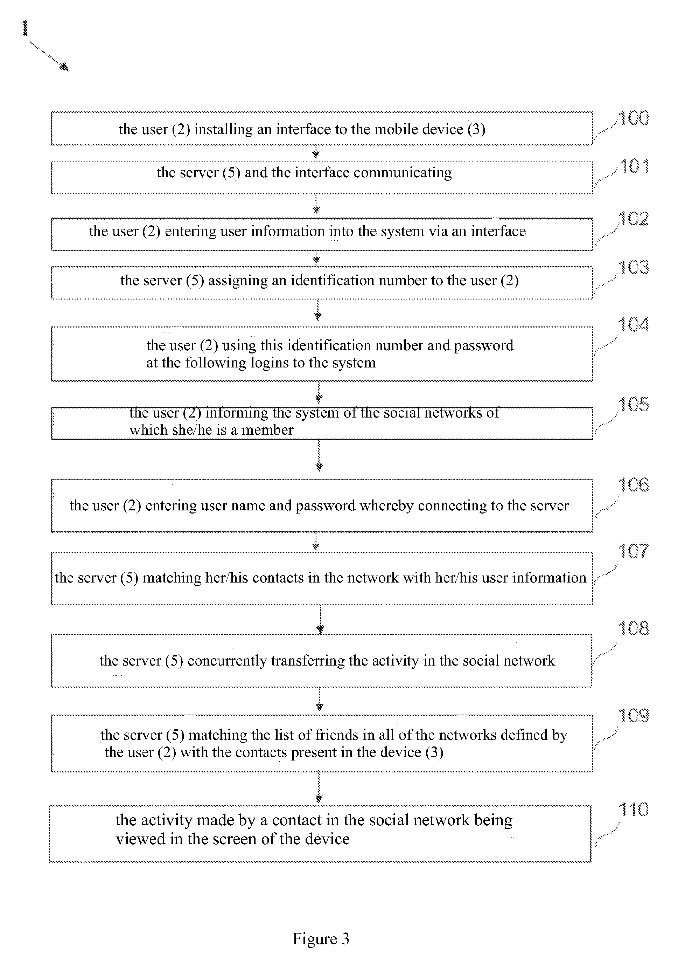

Figure 3 is the algorithmic view of the system.

The components given in the figures are individually numbered where the numbers refer to the following:
1. System for managing social networks through mobile medium
2. User
3. Mobile device
4. GSM network
5. Server
6. Social network address

The inventive system for managing social networks through mobile medium (1) is essentially comprised of
- a user (2) utilizing the system (1),
- a mobile device (3) owned by the user (2) and enabling communication,
- GSM network (4) to which the mobile device (3) will be connected,
- a server (5) by which the system (1) will be managed,
- social networks (6) the user (2) is connected to.

The inventive method essentially comprises the steps of
- the user (2) installing an interface to the mobile device (3) (100),
- the server (5) and the interface communicating (101),
- the user (2) entering user information into the system via an interface (102),
- the server (5) assigning an identification number to the user (2) (103),
- the user (2) using this identification number and password at the following logins to the system (104),
- the user (2) informing the system of the social networks of which she/he is a member (105),
- the user (2) entering user name and password whereby connecting to the server (106),
- the server (5) matching her/his contacts in the network with her/his user information (107),
- the server (5) concurrently transferring the activity in the social network (108),
- the server (5) matching the list of friends in all of the networks defined by the user (2) with the contacts present in the device (3) (109),
- the activity made by a contact in the social network being viewed in the screen of the device (110).

The present method enables the user (2) to manage the social networks (6) of which she/he is a member from a single point and provides a more convenient communication medium to the user (2) upon the system (1) monitoring the user (2) habits.

The user (2) should first install the user interface to her/his mobile device (3) in order to be able to utilize the system (1) (100). Connection will be made to the server (5) with the interface installed to the mobile device (3). The system (1) can not be utilized without installing an interface.

After the user (2) installs the interface to the mobile device (3) thereof (100), the server communicates with the interface (101) and via this interface enters the user information, telephone number and password required by the system and starts registration (102). Upon communicating with the server (5) (101), the server (5) sends an identification number to the user (2) (103). When the user (2) wants to connect to the server (5) she/he will use this number and password (104). The number and password are unique for each user (2) and they are used for identifying the users (2).

The user (2) selects on the screen, which is displayed after installing the interface to the mobile device (3) (100) and registering to the system (1) (102), the social networks (6) to which she/he is subscribed and informs the server (5) (105). Once the user (2) informs the server (5) of the social networks (6) that she/he is subscribed to (105), the server (5) prompts the user for the user name and password for these social networks (6) (106). After this information is conveyed to the server (5), the server (5) matches the user profile and the contacts at that social network (6) (107).

The server (5), after receiving the social network (6) information, concurrently transfers the transactions in the social network (6) to the mobile device (3) (108). After the user (2) informs the server (5) of each network that she/he is subscribed to, the server matches the list of all friends in the social networks defined by the user (2) with the contacts at the mobile device (3) (109).

After this, any transaction made by a contact at the social network can be monitored from the screen of the mobile device (3) (110).

One of the problems with the mobile devices is that communication is made peer to peer. In this method, the user (2) can tag all of the contacts from the mobile device however she/he likes. This way the user (2) can communicate with these tagged groups concurrently. It is possible to send/receive messages, share pictures and share videos with these tagged groups.

The method operates such that it chooses the best communication form when the user (2) desires to communicate with the people included in the group. An example of this can be sending e-mails to the contacts in the groups whose e-mails are listed, while contacting the ones, whose e-mails are not but telephone numbers are listed, by sending short messages. The user (2) can monitor the groups from the screen of the mobile device (3) if she/he desires.

The user (2) can, if she/he wants, inform the other users (2) about her/his status. This information can be for example about her/his mood, an activity that she/he is engaged in or the location thereof or about all of these. The other users (2) can send messages if they would like to communicate after receiving this information.

The interface installed to the mobile device (3) provides various information to the user (2). At the focal point of the interface there are the most contacted people. Among these people the most communicated ones approach to the center while the others move away from the center. Less contacted people move away from the center in time and they are replaced by more contacted ones. Sizes of the icons in the group areas give information about the size of the group and the number of contacts in the group. Flashing of the icon of the group shows that people in that group are communicating via the social network.

Within the framework of these basic concepts, it is possible to develop a wide variety of applications of the inventive system (1) for managing social networks through mobile medium. The invention can not be limited to the examples described herein; it is essentially according to the claims.

## Claims

1. A system for managing social networks through mobile medium (1) **characterized by** the steps of
- the user (2) installing an interface to the mobile device (3) (100),
- the server (5) and the interface communicating (101),
- the user (2) entering user information into the system via an interface (102),
- the server (5) assigning an identification number to the user (2) (103),
- the user (2) using this identification number and password at the following logins to the system (104),
- the user (2) informing the system of the social networks of which she/he is a member (105),
- the user (2) entering user name and password whereby connecting to the server (106),
- the server (5) matching her/his contacts in the network with her/his user information (107),
- the server (5) concurrently transferring the activity in the social network (108),
- the server (5) matching the list of friends in all of the networks defined by the user (2) with the contacts present in the device (3) (109),
- the activity made by a contact in the social network being viewed in the screen of the device (110).

2. A system for managing social networks through mobile medium (1) according to Claim 1, **characterized by** an interface, which enables the user (2) to communicate with the server (5) and shows the people and groups that will be contacted, and which is installed to the mobile device (3) owned by the user (2).

3. A system for managing social networks through mobile medium (1) according to Claim 1 to 2, **characterized by** an interface which enables the user (2) to tag the contacts included in her/his mobile device (3) as she/he desires and to communicate with these tagged groups collectively.

4. A system for managing social networks through mobile medium (1) according to Claim 1 to 3, **characterized by** a mobile device (3) which enables the user (2) to edit the profile information or other information thereof included in the subscribed social networks (6) once, without having to login to each social network (6) one by one.

5. A system for managing social networks through mobile medium (1) according to any of the preceding claims, **characterized by** a mobile device (3) which enables the system members to connect to the server (5) via GSM network (4) service.

6. A system for managing social networks through mobile medium (1) according to any of the preceding claims, **characterized by** a server (5), in which the user (2) saves the social network addresses (6) that she/he is subscribed to, and with which she/he communicates via GSM network (4).
